# EUROPEAN PATENT APPLICATION

(11) **EP 2 018 812 A1**
(43) Date of publication of application: **28.01.2009**
(21) Application number: 07742893.6
(22) Date of filing: 07.05.2007
(51) Int. Cl.: A23K 1/10, A23K 1/00, A23K 1/16, C09K 15/06, C09K 15/34

(54) **FISH MEAL WITH INHIBITED OXIDATION AND PROCESS FOR PRODUCING THE SAME**

(30) Priority: 15.05.2006 JP 2006134832; 23.06.2006 JP 2006173610
(71) Applicant: NIPPON SUISAN KAISHA, LTD., Tokyo 100-0004 (JP)
(72) Inventor: DOISAKI, Nobushige, Tokyo 192-0906 (JP); KAWAHARA, Hiroyuki, Tokyo 192-0906 (JP); HATA, Kazuhiko, Tokyo 192-0906 (JP)
(74) Representative: TBK-Patent
(86) International application number: PCT/JP2007/059458
(87) International publication number: WO 2007/132688

(57) **Abstract**

[Problem]

The problem for the present invention is to provide an antioxidation formulation that is highly safe due to derivation from natural substances and that has an effect when used in fish meal that is at least equivalent to that of the presently utilized ethoxyquin.

[Means to Solve the Problem]

A fish meal contains a vegetable oil distillation-deodorizing distillate as an added antioxidant substance, or the fish meal contains an added vegetable oil distillation-deodorizing distillate and ascorbic acid, or a salt thereof, or an ester thereof A method of production of fish meal controls oxidation by addition of a vegetable oil distillation-deodorizing distillate or by addition the vegetable oil distillation-deodorizing distillate and ascorbic acid, or a salt thereof, or an ester thereof An antioxidation composition for fish meal contains a vegetable oil distillation-deodorizing distillate or the antioxidation composition contains the added vegetable oil distillation-deodorizing distillate and ascorbic acid, or a salt thereof, or an ester thereof A feed is produced by use as raw material of a fish meal to which has been added a vegetable oil distillation-deodorizing distillate or the vegetable oil distillation-deodorizing distillate and ascorbic acid, or a salt thereof, or an ester thereof.

## Description

### [Technical Field]

The present invention relates to an antioxidation formulation for fish meal. In particular, the present invention relates to a fish meal having suppressed oxidation due to addition of an antioxidation composition.

### [Technical Background]

Fish meal is widely used as a raw material for feeds used for aquaculture, farm animal feeds, and pet feeds. Since this fish meal readily is oxidized an antioxidant must be added for the distribution of fish meal. Presently regulations of the Ministry of Agriculture, Forestry, and Fisheries of Japan only permit three types of antioxidants as feed additives, i.e. ethoxyquin, butylated hydroxytoluene (BHT), and butylated hydroxyanisole (BHA). Ethoxyquin has the highest antioxidation activity of these compounds, and in most cases ethoxyquin is the antioxidant used in fish meal. All of these three types of antioxidants are synthetic chemical compounds, and addition of such antioxidants is not necessarily desirable from the standpoint of safety.
However, the rate of oxidation of fish meal increases at high temperatures. When this oxidation is severe, it is accompanied by heat generation, and such heat generation is said to result even in spontaneous combustion. In order to prevent combustion during shipping, international agreements actually require the addition of ethoxyquin to imported fish meal.
Although any of these antioxidants can be added to feed, the total added amount of effective ingredient in the final feed is less than or equal to 150 g/metric ton. Although the added amount in the fish meal and the like (i.e. feed raw material) is not stipulated, the total amount of the respective effective ingredients must be indicated in percentage units.

Vegetable oil distillation-deodorizing distillate (soybean distillate, rapeseed distillate, and the like) is a distillate material that is generated by the deodorization process (steam distillation) of a vegetable oil such as soybean oil, rapeseed oil, and the like; and this material is also called oil sludge or oil dregs. Although this distillate is generated at a rate of about 0.15 to 0.45 percent relative to the oil, the amount of distillate and composition proportions vary according to deodorizing conditions. The general composition proportions of soybean distillate are shown in Table 1 (non-patent literature citation 1). Soybean distillate is used as a source of tocopherol, sterols, vitamin K1, and the like.

**[Table 1]**

| Ingredient | Range (%) |
|---|---|
| free fatty acids | 23 - 25 |
| glycerides, etc. | 3 - 16 |
| sterols | 20 - 32 |
| hydrocarbons | 5 - 10 |
| total tocopherols | 8 - 20 |

### [Non-patent literature citation 1]

"Knowledge about Foods, Mini-book Series, Introduction to Edible Oils-Fats", edited by Yoshinori Kamimura, Nihon Shokuryou Shinbunsha, published Oct. 29, 2004, pp. 154 and 155.

### [Indication of the Invention]

### [Problem to be Solved by the Invention]

The problem for the present invention is to provide an antioxidation formulation for fish meal that has high safety due to derivation from natural substances, that is inexpensive, and that has an effect at least equivalent to that of ethoxyquin.

### [Means to Solve the Problem]

As a result of research of various aspects of antioxidant substances thought to be highly safe, the inventors of the present invention discovered that vegetable oil distillation-deodorizing distillate is effective as an antioxidant for fish meal, and that the fish meal antioxidation effect can be greatly improved by combination of the vegetable oil distillation-deodorizing distillate with ascorbic acid (vitamin C, referred to hereinafter as VC) or ascorbic acid palmitate (referred to hereinafter as AP), which is an ester of ascorbic acid. The inventors of the present invention also discovered that this result was an effect peculiar to fish meal.

The gist of the present invention is the following:
(1) A fish meal characterized by addition of a vegetable oil distillation-deodorizing distillate;
(2) the fish meal according to claim 1, characterized by addition of a vegetable oil distillation-deodorizing distillate and one additive selected from the group consisting of ascorbic acid, ascorbic acid salts, and ascorbic acid esters;
(3) a method for production of fish meal whose oxidation is suppressed characterized by addition of a vegetable oil distillation-deodorizing distillate;
(4) the method for production of fish meal whose oxidation is suppressed, characterized by addition of a vegetable oil distillation-deodorizing distillate and one additive selected from the group consisting of ascorbic acid, ascorbic acid salts, and ascorbic acid esters;
(5) an antioxidation composition for fish meal including vegetable oil distillation-deodorizing distillate;
(6) the antioxidation composition for fish meal, wherein the composition further includes one additive selected from the group consisting of ascorbic acid, ascorbic acid salts, and ascorbic acid esters;
(7) a feed produced using as a raw material the fish meal according to (1) or (2).

### [Effect of the Invention]

The antioxidation formulation of the present invention further combines ascorbic acid with the vegetable oil distillation-deodorizing distillate that is highly safe due to origination from natural substances. When this antioxidation formulation is added to fish meal, an antioxidation effect is displayed that is at least equivalent to that of the synthetic antioxidant ethoxyquin. Oxidation of fish meal is suppressed by use of the antioxidation composition during preservation and distribution.

### [Best Mode for Carrying Out the Invention]

Fish meal is produced by boiling of landed fish, separating out water and oil by use of a press, and then drying. This fish meal is generally called "fish meal" but alternatively is simply called "meal". Normally fish meal is dried to a moisture content of less than or equal to 10%, and then the fish meal is distributed at room temperature. Many fish species are used as the raw material of fish meal, such as horse mackerel (from Chile, Peru, or Russia), true sardine (from Peru or Chile), various other sardines (from Morocco, Chile, Peru, China, or South Africa), mackerel (from Peru or China), herring (from Norway, Russia, or Iceland), capelin smelt (from Iceland), sand eel (from Denmark), various types of codfish (from Norway, United States, or Russia), and Antarctic krill (from the Antarctic Ocean).
Although fish meal was produced many years ago in Japan from sardines and the like, most fish meal now is imported, and fish meal from anchovies and mackerel caught in South America of Peru or Chile is being imported as a main raw material for feed.

The vegetable oil distillation-deodorizing distillate used in the present invention is a residual material generated during the deodorizing process (steam distillation) of the production process of a vegetable oil such as soybean oil, rapeseed oil, and the like. Vegetable oil is oil that is extracted from an oil containing seed, and this vegetable oil is exemplified by soybean oil, rapeseed oil, sesame seed oil, cotton seed oil, olive oil, corn oil, rice bran oil, safflower oil, sunflower oil, and the like. The obtained soybean oil (raw oil) contains phospholipids, free fatty acid, pigment, vitamins, sterols, hydrocarbons, trace metals, odorous ingredients, and the like. If these ingredients are allowed to remain, these ingredients cause quality problems such as odor, worsening of flavor, fuming, worsening of storage ability, and the like. The refining process is generally performed as degumming, deacidification, decoloration, and deodorization with the goal of removing these ingredients. The deodorization step is the final step. During the deodorization step, steam is blown into oil heated to a high temperature under a high vacuum to remove the odorous ingredients within the oil. Simultaneous with this step, other ingredients are also removed, such as free fatty acids, glycerides (monoacylglycerol and diacylglycerol), sterols, hydrocarbons, tocopherol, and the like. Generally the deodorization conditions are 200°C to 260°C, 3 to 10 mm Hg vacuum pressure, and 1 to 5 percent steam feed. The distillate substance produced in this deodorization step is called the "distillate" (also called "sludge" or "oil dregs"). This distillate contains vitamin E (tocopherol), sterols, and fatty acids as main ingredients and additionally contains many trace ingredients distilled under the deodorization conditions of the oil.
The main antioxidation substance of the distillate is tocopherol. However, as shown in comparative example 1, joint use with ascorbic acid is not found to be effective when tocopherol is concentrated by removal of fatty acids and the like by steam distillation of the distillate. Other ingredients present in the distillate are needed, not tocopherol alone.

Although no particular limitation is placed on the added amount of the distillate, the added amount (wt./wt.) is preferably 10 to 10000 ppm in the fish meal, and this amount is more preferably 50 to 1000 ppm. Since the distillate is a natural material that is thought to be highly safe, except for the problem of cost, the upper limit of distillate content is substantially of no particular importance. The amount of distillate is adjusted appropriately according to storage time interval, storage conditions, and the like of the fish meal. The distillate may also be used as a blend of multiple types, such as soybean distillate and rapeseed distillate.

The ascorbic acid, ascorbic acid salt, or ascorbic acid ester used in the present invention is exemplified by ascorbic acid, ascorbic acid esters (such as ascorbyl palmitate, ascorbyl stearate, and the like), and ascorbic acid salts (such as sodium ascorbate and the like). Although no particular limitation is placed on the added amount of the ascorbic acid, ascorbic acid salt, or ascorbic acid ester, this added amount, expressed as ascorbic acid, is preferably 10 to 10000 ppm (wt./wt.), and this added amount is particularly preferably 50 to 1000 ppm.

Any method may be used as the method of addition of the antioxidation composition of the present invention to the fish meal, such as a method of direct spraying on the fish meal during continuous production, or a method of addition into batches thereof, then stirring. An alternative method that may be used adds the antioxidation composition of the present invention dissolved in a solution of ethanol and the like, and thereafter dries the fish meal, and another method that may be used adds the antioxidation composition of the present invention directly or in the form of an emulsion after dissolving in an oily liquid. Although the time of addition may be during the meal production process and the like, generally the time of addition is before or after the drying step.
Although other antioxidant substances may be further added to the antioxidation formulation of the present invention, use of the smallest amount of antioxidant possible is preferred from the standpoint of safety.

The term "feed" in the present invention means a feed such as an aquaculture feed, farm animal feed, pet food, and the like that uses fish meal as a raw material. Particularly for aquaculture feeds that have a high fish meal content, the content of fish meal-derived antioxidant becomes high in proportion to the amount of utilized fish meal, and thus supplying of a safe feed becomes possible by use of the antioxidation formulation of the present invention.

Although specific examples of the present invention are explained below using working examples, the present invention is not limited to these working examples.

### [Working Examples]

### <Working Example 1>

A respective type of antioxidant substance of required amount dissolved in 10 mL of ethanol was added to 8.0 g of antioxidant-free fish meal (mackerel meal containing 9.70% total lipids; triglycerides among total lipid content = 34.9%; phospholipids among total lipid content = 64.5%). After mixing for 1 hour at room temperature, the solvent was removed to prepare antioxidant substance-added meal.
The utilized soybean distillate had an acid value of 73.3 and a vitamin E content of 15.6%. The utilized ascorbyl palmitate (referred to hereinafter as AP) was special reagent grade (purity greater than or equal to 99%). The utilized ethoxyquin was a reagent of 75% purity (Sigma-Aldrich Corp. reagent grade).
1 g of the prepared mackerel meal and antioxidant substance-added meal was placed in a 30 mL gas chromatography vial, and the vial was sealed. The vial was stored in a constant temperature tank at 60°C, oxygen concentration in the headspace was determined by gas chromatographic analysis, and the amount of oxygen consumption calculated from this oxygen concentration was used as an indicator of oxidation.

Results of storage are shown in Table 1 for mackerel meal to which 100 ppm of ethoxyquin, 641 ppm soybean distillate (100 ppm VE as content), and 641 ppm soybean distillate (100 ppm as VE content) plus 100 ppm AP, respectively, had been added. These results showed that oxidation stability was improved by addition of soybean distillate to the meal and showed that an effect equivalent to at least 100 ppm ethoxyquin was obtained by further improvement due to combination of the soybean distillate with AP.

### <Comparative Example 1>

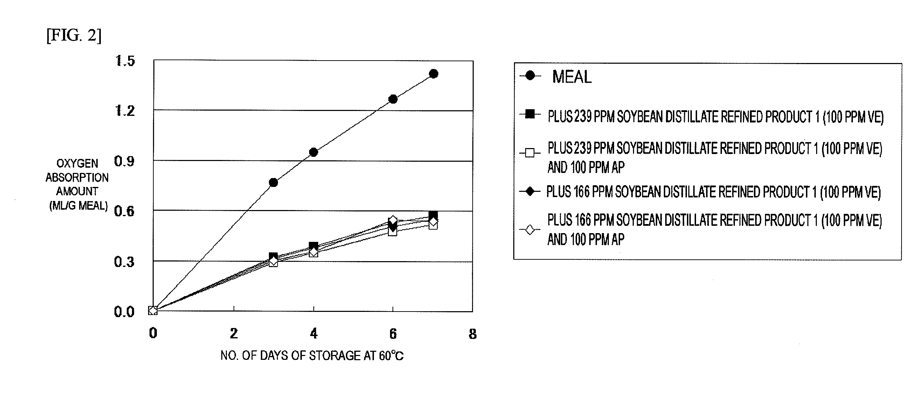

Soybean distillate was subjected to further steam distilling to remove fatty acids and the like having low boiling points and to obtain a concentrated tocopherol soybean distillate refined product 1 (41.9% VE and 5.5 acid number). Soybean distillate was treated with lipase, the treated soybean distillate was subjected to steam distillation to remove low boiling point fatty acids and the like to concentrate tocopherol and to obtain a soybean distillate refined product 2 (60.4% VE and 5.2 acid number). FIG. 2 shows the results of performance of a storage experiment in the same manner as during working example 1 using a meal that contained 100 ppm (as VE content) of added soybean distillate refined product and 100 ppm of added AP. From these results, it is understood that the synergistic effect disappears due to combination of AP with tocopherol-concentrated refined soybean distillate. It is understood that the synergistic effect of combined use with AP is peculiar to the soybean distillate.

### <Working Example 2>

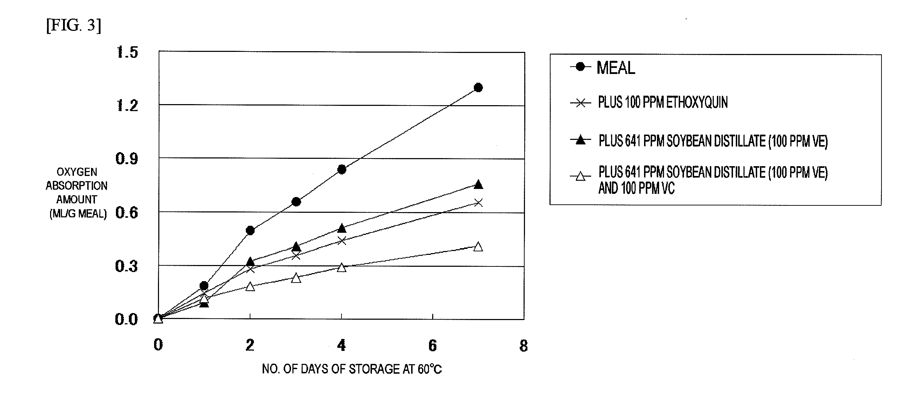

FIG. 3 shows results of performance of storage experiments using meal prepared by addition of an antioxidation composition that combined soybean distillate and ascorbic acid by the same method as that of working example 1. From these results, it is understood that there is also a synergistic effect when soybean distillate is combined with ascorbic acid in place of AP.

### <Comparative Example 2>

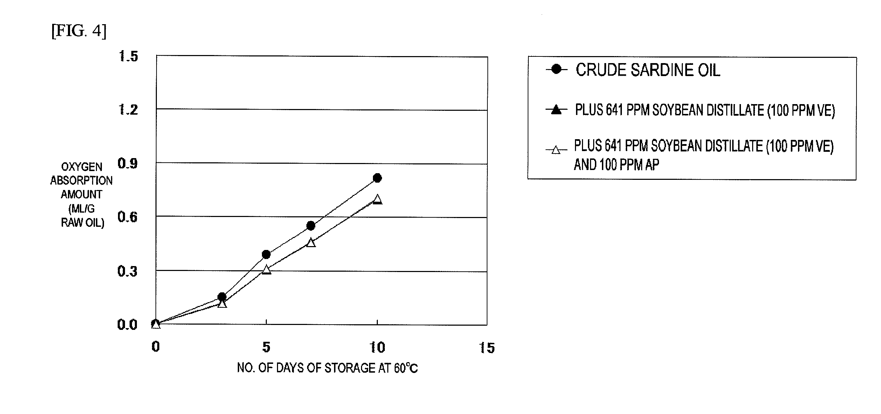

Antioxidant substance was added to fish oil (crude sardine oil), which is the substance that is most readily oxidized among the substances contained in meal, and storage testing was performed at 37°C. Results are shown in FIG. 4. From these results, it is understood that the combination of soybean distillate and AP has no effect on fish oil, and it is understood that the synergistic effect of soybean distillate and AP is characteristic of meal.

### <Working Example 3>

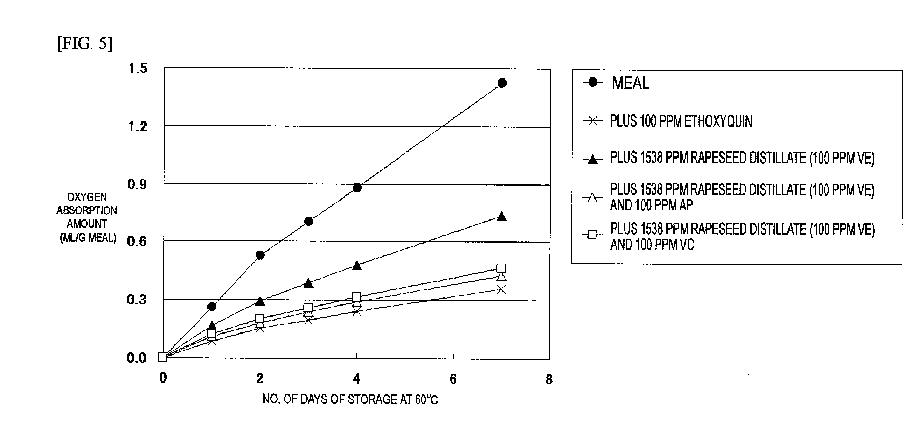

Using the same method as that of working example 1, meal was prepared by addition of an antioxidation composition combining rapeseed distillate and ascorbic acid or ascorbyl palmitate. Results of performance of storage testing are shown in FIG. 5. From these results, it is understood that there is a synergistic effect also when using rapeseed distillate in place of soybean distillate.

### [Possibility of Industrial Use]

The present invention is capable of providing fish meal that has excellent oxidation stability without problems from the standpoint of safety.
The present invention increases the oxidation stability of fish meal by combination with an inexpensive antioxidant substance. As a result, feed can be produced without use of a synthetic antioxidant that would have been undesirable from the standpoint of safety.

### [Simple Explanation of Figures]

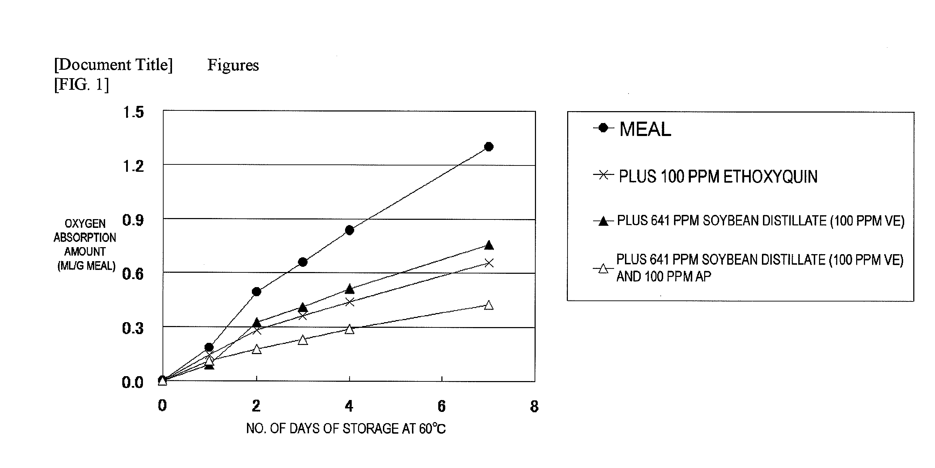

FIG. 1 is a graph showing the amount of oxygen absorption by each meal of working example 1.
FIG. 2 is a graph showing the amount of oxygen absorption by each meal of comparative example 1.
FIG. 3 is a graph showing the amount of oxygen absorption by each meal of working example 2.
FIG. 4 is a graph showing the amount of oxygen absorption by each meal of comparative example 2.
FIG. 5] is a graph showing the amount of oxygen absorption by each meal of working example 3.

## Claims

1. A fish meal **characterized by** addition of a vegetable oil distillation-deodorizing distillate.

2. The fish meal according to claim 1, **characterized by** addition of a vegetable oil distillation-deodorizing distillate and one additive selected from the group consisting of ascorbic acid, ascorbic acid salts, and ascorbic acid esters.

3. The fish meal according to claim 1 or claim 2;
wherein the added amount of the vegetable oil distillation-deodorizing distillate is 10 to 10000 ppm.

4. The fish meal according to claim 2 or claim 3;
wherein the added amount of the ascorbic acid, ascorbic acid salt, or ascorbic acid ester is 10 to 10000 ppm expressed as ascorbic acid concentration.

5. The fish meal according to any one of claims 1 through 4;
wherein the vegetable oil distillation-deodorizing distillate is a soybean distillate or a rapeseed distillate.

6. A method for production of fish meal whose oxidation is suppressed **characterized by** addition of a vegetable oil distillation-deodorizing distillate.

7. The method for production of fish meal whose oxidation is suppressed according to claim 6, **characterized by** addition of a vegetable oil distillation-deodorizing distillate and one additive selected from the group consisting of ascorbic acid, ascorbic acid salts, and ascorbic acid esters.

8. The method for suppression of oxidation of fish meal according to claim 6 or claim 7;
wherein the added amount of the vegetable oil distillation-deodorizing distillate is 10 to 10000 ppm.

9. The method for suppression of oxidation of fish meal according to claim 7 or claim 8;
wherein the added amount of the ascorbic acid, ascorbic acid salt, and ascorbic acid ester is 10 to 10000 ppm expressed as ascorbic acid concentration.

10. The method for suppression of oxidation of fish meal according to any one of claims 6 through 9;
wherein the vegetable oil distillation-deodorizing distillate is a soybean distillate or a rapeseed distillate.

11. An antioxidation composition for fish meal comprising vegetable oil distillation-deodorizing distillate.

12. The antioxidation composition for fish meal according to claim 9, **characterized by** comprising vegetable oil distillation-deodorizing distillate and one additive selected from the group consisting of ascorbic acid, ascorbic acid salts, and ascorbic acid esters.

13. The antioxidation composition for fish meal according to claim 11 or claim 12;
wherein the vegetable oil distillation-deodorizing distillate is a soybean distillate or a rapeseed distillate.

14. A feed produced using as a raw material the fish meal according to any one of claims 1 through 5.
